(19) Europäisches Patentamt
European Patent Office
Office européen des brevets

(11) **EP 3 906 283 B1**

(12) **EUROPEAN PATENT SPECIFICATION**

(45) Date of publication and mention
of the grant of the patent:
**08.03.2023 Bulletin 2023/10**

(21) Application number: **20703578.3**

(22) Date of filing: **03.01.2020**

(51) International Patent Classification (IPC):
*C09D 7/20* (2018.01)     *C11D 7/50* (2006.01)
*C11D 11/00* (2006.01)

(52) Cooperative Patent Classification (CPC):
**C11D 7/509; C09D 7/20;** B05D 5/083;
B05D 2401/10; C11D 7/241; C11D 7/245;
C11D 7/261; C11D 7/264; C11D 7/266; C11D 7/28;
C11D 7/30

(86) International application number:
**PCT/US2020/012123**

(87) International publication number:
**WO 2020/142650 (09.07.2020 Gazette 2020/28)**

(54) **QUATERNARY AZEOTROPE AND AZEOTROPE-LIKE COMPOSITIONS FOR SOLVENT AND CLEANING APPLICATIONS**

QUATERNÄRE AZEOTROPE UND AZEOTROPARTIGE ZUSAMMENSETZUNGEN FÜR LÖSUNGSMITTEL- UND REINIGUNGSANWENDUNGEN

COMPOSITIONS QUATERNAIRES AZÉOTROPES ET DE TYPE AZÉOTROPE DESTINÉES À DES APPLICATIONS DE SOLVANT ET DE NETTOYAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.01.2019 US 201962788481 P**

(43) Date of publication of application:
**10.11.2021 Bulletin 2021/45**

(73) Proprietor: **The Chemours Company FC, LLC Wilmington, Delaware 19801 (US)**

(72) Inventors:
• **WU, Raymond
Mount Laurel, New Jersey 08054 (US)**

• **FRASER, Michael R.
Quakertown, Pennsylvania 18951 (US)**
• **MUSYIMI, Harrison K.
Bear, Delaware 19701 (US)**
• **SIMONI, Luke David
Wilmington, Delaware 19806 (US)**

(74) Representative: **Morf, Jan Stefan et al
Abitz & Partner
Patentanwälte mbB
Arabellastrasse 17
81925 München (DE)**

(56) References cited:
WO-A1-2014/096417     WO-A1-2015/075034
WO-A1-2016/182700     WO-A1-2018/125738
WO-A2-2011/031581

Description

## TECHNICAL FIELD

This invention relates to quaternary azeotrope or azeotrope-like compositions comprising trans-dichloroethylene and three or more additional components. The compositions described herein may be useful, for example, in cleaning and defluxing fluid applications.

## BACKGROUND

Chlorofluorocarbon (CFC) and hydrofluorocarbon (HFC) compounds have been used extensively in the area of semiconductor manufacturing to clean surfaces such as magnetic disk media. However, chlorine-containing compounds such as CFC compounds are detrimental to the Earth's ozone layer. In addition, many of the hydrofluorocarbons used to replace CFC compounds have been found to contribute to global warming. Therefore, there is a need to identify new environmentally safe solvents for cleaning applications, such as removing residual flux, lubricant or oil contaminants, and particles. There is also a need for identification of new solvents for deposition of fluorolubricants and for drying or dewatering of substrates that have been processed in aqueous solutions.

WO 2018/125738 A1 discloses multi-component, azeotrope-like compositions containing trans-dichloroethylene, 1,1,1,3,3-pentafluorobutane, and 1,1,2,2-tetrafluoroethyl-2,2,2-trifluoroethyl ether. These compositions also form an azeotrope-like mixture with methanol. These compositions are useful as solvents in refrigeration flushing, oxygen system cleaning, foam blowing, and cleaning operations such as cold cleaning, vapor degreasing, and aerosol cleaners.

WO 2015/075034 A1 relates to certain non-flammable compositions containing 1,1,1,3,3-pentafluorobutane (R365mfc), 1,2-dichloroethylene, ethoxynonafluorobutane (HFE-7200), and a linear C1 to C4 alcohol as well as to mixtures containing these compositions and to the use of these non-flammable compositions or these mixtures, especially as precision cleaning agents for solid surfaces and for flushing, especially of refrigeration systems.

WO 2014/096417 A1 pertains to non-flammable ternary compositions and use of these compositions. The disclosure relates to certain non-flammable compositions containing 1,1,1,3,3-pentafluorobutane (R365mfc), 1,2-dichloroethylene and a hydrofluoroether, to mixtures containing these compositions and to the use of these non-flammable compositions or these mixtures, especially as precision cleaning agents for solid surfaces and for flushing, especially of refrigeration systems.

WO 2016/182700 A1 discloses compositions comprising 90 to 99 weight percent trans-1,2-dichloroethylene, from 0.1 to 8 weight percent methylperfluoroheptene ethers and from 0.5 to 2.0 weight percent of a fluorocarbon selected from the group consisting of Z-1,1,1,4,4,4-hexafluoro-2-butene, 1,3,4,4,4-pentafluoro-3-trifluoromethy-1-butene, 1,1,1,4,4,5,5,5-octafluoro-2-pentene, perfluorobutyl methyl ether, perflurobutyl ethyl ether, perfluoroisopropylmethyl ether, perfluoroethyl isopropyl ketone, heptafluorocyclopentane, and E-1, 1, 1-trifluoro-3-chloro-2-propene, wherein the composition is non-flamable. The disclosure further provides a method for removing residue from a surface of an article comprising: (a) contacting the article with a composition comprising a composition of MPHE, trans-1,2-dichloroethylene and a fluorocarbon selected from the group consisting of Z-1, 1,1,4,4,4-hexafluoro- 2-butene, 1,3,4,4,4-pentafluoro-3-trifluoromethy-1-butene, 1,1,1,4,4,5,5,5-octafluoro-2-pentene, perfluorobutyl methyl ether, perflurobutyl ethyl ether, perfluoroisopropylmethyl ether, perfluoroethyl isopropyl ketone, heptafluorocyclopentane, and E-1,1,1-trifluoro-3-chloro-2-propene; and (b) recovering the surface from the composition.

WO 2011/031581 A2 provides compositions that include blends that consist essentially of 1,1,1,2,2,3,4,5,5,5-decafluoro-3-methoxy-4-(trifluoromethyl)pentane, trans-1,2-dichloroethylene, and a third component. The third component is selected from methanol, ethanol, isopropanol, t-butanol, and 1-propanol. The blends form ternary azeotropes. Provided compositions can be useful for cleaning electronic parts, as coating solvent components, as heat transfer fluids, and as lubricants.

## DESCRIPTION OF DRAWINGS

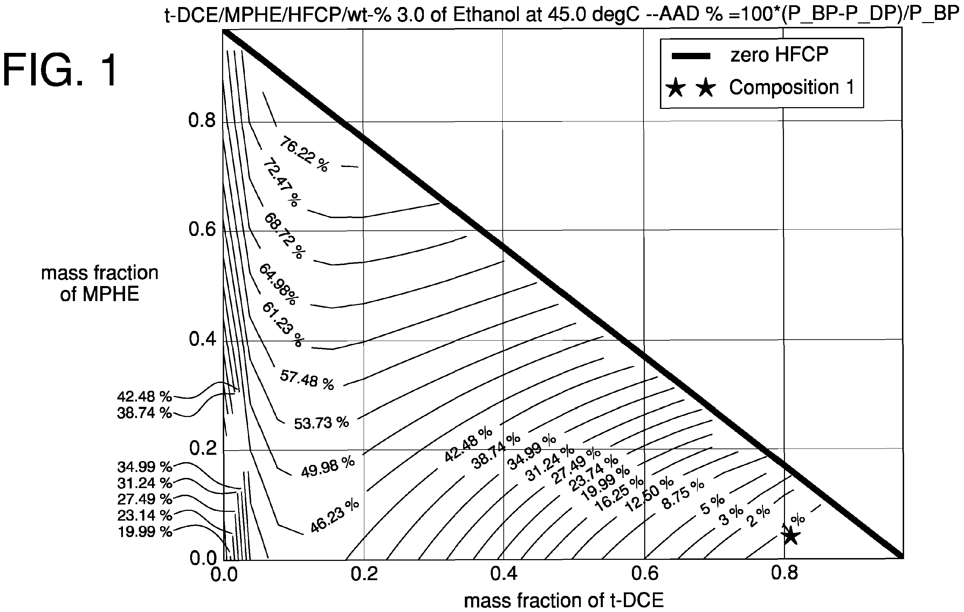

Figure 1 shows the ternary composition space for the compositions comprising trans-1,2-dichloroethylene (t-DCE), methyl perfluoroheptene ether (MPHE), 1,1,2,2,3,3,4-heptafluorocyclopentane (HFCP), and 3 weight percent ethanol at the boiling point of Composition 1 (45°C; indicated by the star).

## SUMMARY

The present application provides, *inter alia,* a composition according to claims 1 and 10.

The present application further provides processes for dissolving a solute according to claim 11.

The present application further provides a processes of cleaning a surface according to claim 12.

The present application further provides a process for removing at least a portion of water from the surface of a wetted substrate according to claim 13.

The present application further provides processes of depositing a fluorolubricant on a surface according to claim 15.

Unless otherwise defined, all technical and scientific terms used herein have the same meaning as commonly understood by one of ordinary skill in the art to which this invention belongs. Methods and materials are described herein for use in the present invention; other, suitable methods and materials known in the art can also be used. The materials, methods, and examples are illustrative only and not intended to be limiting. All publications, patent applications, patents, sequences, database entries, and other references mentioned herein are incorporated by reference in their entirety. In case of conflict, the present specification, including definitions, will control

## DETAILED DESCRIPTION

Nonflammable fluorinated solvent based cleaning agents are useful in industrial vapor degreasing and flux removal applications. Hydrofluorocarbons (HFCs) and such blends have been successful in critical cleaning due to the combination of good safety and health attributes, zero ozone depletion, good solvency, and low viscosity properties. Recent environmental concerns and regulations have shifted from ozone depletion to global warming in view of global treaties (*e.g.*, F-gas regulations in the European Union, SNAP rulings in the United States, and the like). Thus, there is a use for alternative cleaning agents which are environmentally sustainable and exhibit low GWP. In addition, azeotrope and azeotrope-like compositions are desirable for critical cleaning applications, as such composition do not fractionate after distillation, condensation, and re-mixing. Azeotrope and azeotrope-like compositions therefore provide consistent cleaning performance, minimize solvent maintenance time, and improve production throughput. High solvency is also desirable for degreasing and the ability to remove flux residues from lead free and no clean solders on electronic components.

Accordingly, the present application provides new quaternary azeotropic and azeotrope-like compositions comprising mixtures of trans-dichloroethyene and three or more additional components. These compositions have utility in many of the applications formerly served by HFCs. The compositions of the present application possess some or all of the desired properties discussed above, little or no environmental impact, and the ability to dissolve oils, greases, and/or fluxes. Thus, the compositions provided herein may be useful as cleaning agents, defluxing agents, and/or degreasing agents.

*Definitions and Abbreviations*

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

As used herein, the term "consisting essentially of" is used to define a composition, method that includes materials, steps, features, components, or elements, in addition to those literally disclosed provided that these additional included materials, steps, features, components, or elements do not materially affect the basic and novel characteristic(s) of the claimed invention, especially the mode of action to achieve the desired result of any of the processes of the present invention. The term "consists essentially of" or "consisting essentially of" occupies a middle ground between "comprising" and "consisting of".

Also, use of "a" or "an" are employed to describe elements and components described herein. This is done merely for convenience and to give a general sense of the scope of the invention. This description should be read to include one or at least one and the singular also includes the plural unless it is obvious that it is meant otherwise.

As used herein, the term "about" is meant to account for variations due to experimental error (e.g., plus or minus approximately 10% of the indicated value). All measurements reported herein are understood to be modified by the term "about", whether or not the term is explicitly used, unless explicitly stated otherwise.

Throughout the definitions, the term "$C_{n-m}$" indicates a range which includes the endpoints, wherein n and m are integers and indicate the number of carbons. Examples include $C_{1-6}$, $C_{5-8}$, and the like.

As used herein, the term "$C_{n-m}$ alkyl", refers to a saturated hydrocarbon group that may be straight-chain or branched, having n to m carbons. Exemplary alkyl moieties include, but are not limited to, methyl, ethyl, *n*-propyl, isopropyl, *n*-butyl, *tert*-butyl, isobutyl, *sec*-butyl, *n*-pentyl, 3-pentyl, *n*-hexyl, *n*-heptyl, *n*-octyl, and the like. In some embodiments, the alkyl group contains from 1 to 8 carbon atoms, from 5 to 8 carbon atoms, from 1 to 6 carbon atoms, from 1 to 3 carbon atoms, or from 1 to 2 carbon atoms.

As used herein, the term "$C_{n-m}$alcohol" refers to a group of formula ($C_{n-m}$ alkyl)-OH, wherein the alkyl group has n to m carbon atoms. Exemplary alcohols include, but are not limited to methanol, ethanol, propanol, isopropanol, and butanol. In some embodiments, the alcohol is a $C_{1-6}$ alcohol.

As used herein, the term "$C_{n-m}$ ketone" refers to a group of formula ($C_{n-m}$ alkyl)C(O)($C_{n-m}$ alkyl), wherein each alkyl independently has n to m carbon atoms. Exemplary ketones include, but are not limited to dimethyl ketone (*i.e.*, acetone), ethyl methyl ketone, diethyl ketone, and the like. In some embodiments, the ketone is a $C_{3-6}$ ketone.

As used herein, the term "$C_{n-m}$ alkane", refers to a saturated hydrocarbon compound that may be straight-chain or branched, having n to m carbons. Exemplary alkanes include, but are not limited to methane, ethane, n-propane, isopropane, n-butane, tert-butane, isobutane, sec-butane, n-pentane, 3-pentane, n-hexane, n-heptane, n-octane, and the like. In some embodiments, the alkane is a $C_{5-8}$ alkane.

As used herein, the term "$C_{n-m}$ cycloalkane" refers to non-aromatic cyclic hydrocarbon compound having n to m carbon atoms. Exemplary cycloalkanes include, but are not limited to cyclopropane, cyclobutane, cyclopentane, cyclohexane, cycloheptane, cyclooctane, and the like. In some embodiments, the cycloalkane is a $C_{3-6}$ cycloalkane.

As used herein, the term "$C_{n-m}$ alkyl acetate" refers to a compound of formula ($C_{n-m}$ alkyl)OC(O)CH_3, wherein the alkyl has n to m carbon atoms. Exemplary alkyl acetates include, but are not limited to methyl acetate (*i.e.*, $CH_3OC(O)CH_3$), ethyl acetate (*i.e.*, $CH_3CH_2OC(O)CH_3$), propyl acetate (*i.e.*, $CH_3CH_2CH_2OC(O)CH_3$), isopropyl acetate (*i.e.*, $(CH_3)_2CHOC(O)CH_3$), and the like. In some embodiments, the alkyl acetate is a $C_{1-6}$ alkyl acetate. In some embodiments, the alkyl acetate is a $C_{1-3}$ alkyl acetate.

When an amount, concentration, or other value or parameter is given as either a range, preferred range or a list of upper preferable values and/or lower preferable values, this is to be understood as specifically disclosing all ranges formed from any pair of any upper range limit or preferred value and any lower range limit or preferred value, regardless of whether ranges are separately disclosed. Where a range of numerical values is recited herein, unless otherwise stated, the range is intended to include the endpoints thereof, and all integers and fractions within the range.

As recognized in the art, an azeotropic composition is an admixture of two or more different components which, when in liquid form and (1a) under a given constant pressure, will boil at a substantially constant temperature, which temperature may be higher or lower than the boiling temperatures of the individual components, or (1b) at a given constant temperature, will boil at a substantially constant pressure, which pressure may be higher or lower than the boiling pressure of the individual components, and (2) will boil at substantially constant composition, which phase compositions, while constant, are not necessarily equal (see, *e.g.,* M. F. Doherty and M.F. Malone, Conceptual Design of Distillation Systems, McGraw-Hill (New York), 2001, 185).

A homogeneous azeotrope, in which a single vapor phase is in equilibrium with a single liquid phase, has, in addition to properties (1a), (1b), and (2) above, the composition of each component is the same in each of the coexisting equilibrium phases. The general term "azeotrope" is a commonly used alternative name for a homogeneous azeotrope.

As used herein, an "azeotrope-like" composition refers to a composition that behaves like an azeotropic composition (*i.e.*, has constant boiling characteristics or a tendency not to fractionate upon boiling or evaporation). Hence, during boiling or evaporation, the vapor and liquid compositions, if they change at all, change only to a minimal or negligible extent. In contrast, the vapor and liquid compositions of non-azeotrope-like compositions change to a substantial degree during boiling or evaporation.

As used herein, the terms "azeotrope-like" or "azeotrope-like behavior" refer to compositions that exhibit dew point pressure and bubble point pressure with virtually no pressure differential. In some embodiments, the difference in the dew point pressure and bubble point pressure at a given temperature is 3% or less. In some embodiments, the difference in the bubble point and dew point pressures is 5% or less.

Chemical Abbreviations

The following abbreviations may be used throughout the present application.

**CFC:** chlorofluorocarbon
**t-DCE:** *trans*-1,2-dichloroethylene
**EtOH:** ethanol
**HCFO:** hydrochlorofluoroolefin
**HCFO-1233zd(Z):** (Z)-1-chloro-3,3,3-trifluoropropene
**HCFO-1233zd(E):** (E)-1-chloro-3,3,3-trifluoropropene
**HCFO-1233yd(Z):** (Z)-1-chloro-2,3,3-trifluoro-1-propene
**HFC:** hydrofluorocarbon
**HFC-43-10mee or XF:** 1,1,1,2,2,3,4,5,5,5-decafluoropentane
**HFCP:** 1,1,2,2,3,3,4-heptafluorocyclopentane

**HFE:** hydrofluoroether
**HFE-7000:** perfluoroisopropylmethyl ether
**HFE-7100:** mixture of 1-methoxyperfluorobutane and 1-methoxyperfluoroisobutane
**HFE-7200:** mixture of 1-ethoxyperfluorobutane and 1-ethoxyperfluoroisobutane
**HFE-7300:** 3-methoxyperfluoroisohexane
**HFE-347pc-f:** 1,1,2,2-tetrafluoroethyl-2,2,2-trifluoroethyl ether
**HFO:** hydrofluoroolefin
**HFO-1336mzz(Z):** (Z)-1,1,1,4,4,4, hexafluoro-2-butene
**MeOH:** methanol
**MPHE:** methyl perfluoroheptene ether
**Novec™ 7300:** 1,1,1,2,2,3,4,5,5,5-decafluoro-3-methoxy-4-(trifluoromethyl)pentane

*Azeotrope and Azeotrope-Like Compositions*

The present application provides compositions according to claims 1 and 10.

In some embodiments, the composition is an azeotrope (*i.e.,* azeotropic) composition. In some embodiments, the second, third, and forth components are present in the composition in amounts effective to form an azeotrope composition with the trans-1,2-dichloroethylene.

In some embodiments, the composition is an azeotrope-like composition. In some embodiments, the second, third, and forth components are present in the composition in amounts effective to form an azeotrope-like composition with the trans-1,2-dichloroethylene.

In some embodiments, the composition comprises 75 to 85 weight percent trans-1,2-dichloroethylene, for example, 75 to 83, 75 to 81, 75 to 79, 75 to 77, 77 to 85, 77 to 83, 77 to 81, 77 to 79, 79 to 85, 79 to 83, 79 to 81, 81 to 85, 81 to 83, or 83 to 85 weight percent trans-1,2-dichloroethylene. In some embodiments, the composition comprises 79 to 81 weight percent trans-1,2-dichloroethylene. In some embodiments, the composition comprises about 80 weight percent trans-1,2-dichloroethylene.

In some embodiments, the composition comprises 70 to 80 weight percent trans-1,2-dichloroethylene, for example, 70 to 78, 70 to 76, 70 to 74, 70 to 72, 72 to 80, 72 to 78, 72 to 76, 72 to 74, 74 to 80, 74 to 78, 74 to 76, 76 to 80, 76 to 78, or 78 to 80 weight percent trans-1,2-dichloroethylene. In some embodiments, the composition comprises 74 to 76 weight percent trans-1,2-dichloroethylene. In some embodiments, the composition comprises about 75 weight percent trans-1,2-dichloroethylene.

In some embodiments, the second component is a hydrofluoroether which is 1,1,1,2,2,3,4,5,5,5-decafluoro-3-methoxy-4-(trifluoromethyl)pentane.

In some embodiments, the composition comprises 5 to 15 weight percent 1,1,1,2,2,3,4,5,5,5-decafluoro-3-methoxy-4-(trifluoromethyl)pentane, for example, 5 to 10 or 10 to 15 weight percent 1, 1, 1,2,2,3,4,5,5,5-decafluoro-3-methoxy-4-(trifluoromethyl)pentane. In some embodiments, the composition comprises 10 to 2 weight percent 1,1,1,2,2,3,4,5,5,5-decafluoro-3-methoxy-4-(trifluoromethyl)pentane. In some embodiments, the composition comprises about 11 weight percent 1,1,1,2,2,3,4,5,5,5-decafluoro-3-methoxy-4-(trifluoromethyl)pentane.

In some embodiments, the second component is an alkyl perfluoroalkene ether which is methyl perfluoroheptene ether.

In some embodiments, the composition comprises 1 to 5 weight percent methyl perfluoroheptene ether, for example, 1 to 4, 1 to 3, 1 to 2, 2 to 5, 2 to 4, 2 to 3, 3 to 5, 3 to 4, or 4 to 5 weight percent methyl perfluoroheptene ether. In some embodiments, the composition comprises 3 to 5 weight percent methyl perfluoroheptene ether. In some embodiments, the composition comprises about 4 weight percent methyl perfluoroheptene ether.

In some embodiments, the methyl perfluoroheptene ether comprises a mixture two or more structural and/or stereoisomers.

In some embodiments, the methyl perfluoroheptene ether comprises a mixture of 48 to 52 weight percent 5-methoxy perfluoro-3-heptene, 18 to 22 weight percent 3-methoxy perfluoro-3-heptene, 18 to 22 weight percent 4-methoxy perfluoro-2-heptene, and 6 to 10 weight percent 4-methoxy perfluoro-3-heptene.

In some embodiments, the methyl perfluoroheptene ether comprises a mixture of about 50 weight percent 5-methoxy perfluoro-3-heptene, about 20 weight percent 3-methoxy perfluoro-3-heptene, about 20 weight percent 4-methoxy perfluoro-2-heptene, and about 8 weight percent 4-methoxy perfluoro-3-heptene.

In some embodiments, the methyl perfluoroheptene ether comprises a mixture of 48 to 52 weight percent 5-methoxy (E)-perfluoro-3-heptene, 12 to 16 weight percent 3-methoxy (E)-perfluoro-3-heptene, 4 to 8 weight percent 3-methoxy (Z)-perfluoro-3-heptene, 18 to 22 weight percent 4-methoxy (E)-perfluoro-2-heptene, 1 to 3 weight percent 4-methoxy (Z)-perfluoro-3-heptene, and 4 to 8 weight percent 4-methoxy (E)-perfluoro-3-heptene.

In some embodiments, the methyl perfluoroheptene ether comprises a mixture of about 50 weight percent 5-methoxy (E)-perfluoro-3-heptene, about 14 weight percent 3-methoxy (E)-perfluoro-3-heptene, about 6 weight percent 3-methoxy (Z)-perfluoro-3-heptene, about 20 weight percent 4-methoxy (E)-perfluoro-2-heptene, about 2 weight percent 4-methoxy (Z)-perfluoro-3-heptene, and about 6 weight percent 4-methoxy (E)-perfluoro-3-heptene.

The third component is 1,1,2,2,3,3,4-heptafluorocyclopentane.

In some embodiments, the composition comprises 10 to 15 weight percent 1,1,2,2,3,3,4-heptafluorocyclopentane, for example, 10 to 14, 10 to 13, 10 to 12, 10 to 11, 11 to 15, 11 to 14, 11 to 13, 11 to 12, 12 to 15, 12 to 14, 12 to 13, 13 to 15, 13 to 14, or 14 to 15 weight percent 1,1,2,2,3,3,4-heptafluorocyclopentane. In some embodiments, the composition comprises 11 to 13 weight percent 1,1,2,2,3,3,4-heptafluorocyclopentane. In some embodiments, the composition comprises about 12 weight percent 1,1,2,2,3,3,4-heptafluorocyclopentane.

In some embodiments, the composition comprises about 10 weight percent 1,1,2,2,3,3,4-heptafluorocyclopentane.

In some embodiments, the fourth component is a $C_{1-6}$ alcohol selected from ethanol, and isopropanol.

In some embodiments, the $C_{1-6}$ alcohol is ethanol. In some embodiments, the composition comprises 1 to 5 weight percent ethanol, for example, 1 to 4, 1 to 3, 1 to 2, 2 to 5, 2 to 4, 2 to 3, 3 to 5, 3 to 4, or 4 to 5 weight percent ethanol. In some embodiments, the composition comprises 2 to 4 weight percent ethanol. In some embodiments, the composition comprises about 3 weight percent ethanol.

In some embodiments, the $C_{1-6}$ alcohol is isopropanol. In some embodiments, the composition comprises 1 to 5 weight percent isopropanol, for example, 1 to 4, 1 to 3, 1 to 2, 2 to 5, 2 to 4, 2 to 3, 3 to 5, 3 to 4, or 4 to 5 weight percent isopropanol. In some embodiments, the composition comprises 2 to 4 weight percent isopropanol. In some embodiments, the composition comprises about 3 weight percent isopropanol.

In some embodiments, the fourth component is a $C_{5-8}$ alkane which is n-hexane. In some embodiments, the composition comprises 1 to 5 weight percent n-hexane, for example, 1 to 4, 1 to 3, 1 to 2, 2 to 5, 2 to 4, 2 to 3, 3 to 5, 3 to 4, or 4 to 5 weight percent n-hexane. In some embodiments, the composition comprises 2 to 4 weight percent n-hexane. In some embodiments, the composition comprises about 4 weight percent n-hexane.

In some embodiments, the composition comprising trans-1,2-dichloroethylene, methyl perfluoroheptene ether, 1,1,2,2,3,3,4-heptafluorocyclopentane, and ethanol has a boiling point of 44°C to 46°C at a pressure of about 101 kPa.

In some embodiments, the composition comprising trans-1,2-dichloroethylene, methyl perfluoroheptene ether, 1,1,2,2,3,3,4-heptafluorocyclopentane, and ethanol has a boiling point of about 45°C at a pressure of about 101 kPa.

In some embodiments, the composition provided herein consists essentially of trans-1,2-dichloroethylene, methyl perfluoroheptene ether, 1,1,2,2,3,3,4-heptafluorocyclopentane, and ethanol.

In some embodiments, the composition provided herein consists of trans-1,2-dichloroethylene, methyl perfluoroheptene ether, 1,1,2,2,3,3,4-heptafluorocyclopentane, and ethanol.

In some embodiments, the composition comprises:

i) 75 to 85 weight percent trans-1,2-dichloroethylene;
ii) 1 to 5 weight percent methyl perfluoroheptene ether;
iii) 10 to 15 weight percent 1,1,2,2,3,3,4-heptafluorocyclopentane; and
iv) 1 to 5 weight percent ethanol.

In some embodiments, the composition comprises:

i) 79 to 81 weight percent trans-1,2-dichloroethylene;
ii) 3 to 5 weight percent methyl perfluoroheptene ether;
iii) 11 to 13 weight percent 1,1,2,2,3,3,4-heptafluorocyclopentane; and
iv) 2 to 4 weight percent ethanol.

In some embodiments, the composition comprises:

i) about 81 weight percent trans-1,2-dichloroethylene;
ii) about 4 weight percent methyl perfluoroheptene ether;
iii) about 12 weight percent 1,1,2,2,3,3,4-heptafluorocyclopentane; and
iv) about 3 weight percent ethanol.

In some embodiments, the composition comprising trans-1,2-dichloroethylene, methyl perfluoroheptene ether, 1,1,2,2,3,3,4-heptafluorocyclopentane; and isopropanol has a boiling point of 45°C to 47°C at a pressure of about 101 kPa.

In some embodiments, the composition comprising trans-1,2-dichloroethylene, methyl perfluoroheptene ether, 1,1,2,2,3,3,4-heptafluorocyclopentane; and isopropanol has a boiling point of about 46°C at a pressure of about 101 kPa.

In some embodiments, the composition consists essentially of trans-1,2-dichloroethylene, methyl perfluoroheptene ether, 1,1,2,2,3,3,4-heptafluorocyclopentane, and isopropanol.

In some embodiments, the composition consists of trans-1,2-dichloroethylene, methyl perfluoroheptene ether, 1,1,2,2,3,3,4-heptafluorocyclopentane, and isopropanol.

In some embodiments, the composition comprises:

i) 75 to 85 weight percent trans-1,2-dichloroethylene;
ii) 1 to 5 weight percent methyl perfluoroheptene ether;
iii) 10 to 15 weight percent 1,1,2,2,3,3,4-heptafluorocyclopentane; and
iv) 1 to 5 weight percent isopropanol.

In some embodiments, the composition comprises:

i) 79 to 81 weight percent trans-1,2-dichloroethylene;
ii) 3 to 5 weight percent methyl perfluoroheptene ether;
iii) 11 to 13 weight percent 1,1,2,2,3,3,4-heptafluorocyclopentane; and
iv) 2 to 4 weight percent isopropanol.

In some embodiments, the composition comprises:

i) about 81 weight percent trans-1,2-dichloroethylene;
ii) about 4 weight percent methyl perfluoroheptene ether;
iii) about 12 weight percent 1,1,2,2,3,3,4-heptafluorocyclopentane; and
iv) about 3 weight percent isopropanol.

In some embodiments, the composition comprising trans-1,2-dichloroethylene, 1,1,1,2,2,3,4,5,5,5-decafluoro-3-methoxy-4-(trifluoromethyl)pentane, 1,1,2,2,3,3,4-heptafluorocyclopentane, and n-hexane has a boiling point of 45°C to 47°C at a pressure of about 101 kPa.

In some embodiments, the composition comprising trans-1,2-dichloroethylene, 1,1,1,2,2,3,4,5,5,5-decafluoro-3-methoxy-4-(trifluoromethyl)pentane, 1,1,2,2,3,3,4-heptafluorocyclopentane, and n-hexane has a boiling point of about 46°C at a pressure of about 101 kPa.

In some embodiments, the composition consists essentially of trans-1,2-dichloroethylene, 1,1,1,2,2,3,4,5,5,5-decafluoro-3-methoxy-4-(trifluoromethyl)pentane, 1,1,2,2,3,3,4-heptafluorocyclopentane, and n-hexane.

In some embodiments, the composition consists of trans-1,2-dichloroethylene, 1,1,1,2,2,3,4,5,5,5-decafluoro-3-methoxy-4-(trifluoromethyl)pentane, 1,1,2,2,3,3,4-heptafluorocyclopentane, and n-hexane.

In some embodiments, the composition comprises:

i) 70 to 80 weight percent trans-1,2-dichloroethylene;
ii) 5 to 15 weight percent 1,1,1,2,2,3,4,5,5,5-decafluoro-3-methoxy-4-(trifluoromethyl)pentane;
iii) 5 to 10 weight percent 1,1,2,2,3,3,4-heptafluorocyclopentane; and
iv) 1 to 5 weight percent n-hexane.

In some embodiments, the composition comprises:

i) 74 to 76 weight percent trans-1,2-dichloroethylene;
ii) 10 to 12 weight percent 1,1,1,2,2,3,4,5,5,5-decafluoro-3-methoxy-4-(trifluoromethyl)pentane;
iii) 8 to 10 weight percent 1,1,2,2,3,3,4-heptafluorocyclopentane; and
iv) 2 to 4 weight percent n-hexane.

In some embodiments, the composition comprises:

i) about 75 weight percent trans-1,2-dichloroethylene;
ii) about 11 weight percent 1,1,1,2,2,3,4,5,5,5-decafluoro-3-methoxy-4-(trifluoromethyl)pentane;
iii) about 10 weight percent 1,1,2,2,3,3,4-heptafluorocyclopentane; and
iv) about 4 weight percent n-hexane.

*Methods of Use*

In some embodiments, the compositions described herein may useful as cleaning agents, defluxing agents, and/or degreasing agents. Accordingly, the present application provides a process of cleaning a surface, comprising contacting a composition provided herein with said surface. In some embodiments, the process comprises removing a residue from a surface or substrate, comprising contacting the surface or substrate with a composition provided herein and recovering the surface or substrate from the composition.

In some embodiments, the present application further provides a process for dissolving a solute, comprising contacting and mixing said solute with a sufficient quantity of a composition provided herein.

In some embodiments, the surface or substrate may be an integrated circuit device, in which case, the residue comprises rosin flux or oil. The integrated circuit device may be a circuit board with various types of components, such as Flip chips, μBGAs, or Chip scale packaging components. The surface or substrate may additionally be a metal surface such as stainless steel. The rosin flux may be any type commonly used in the soldering of integrated circuit devices, including but not limited to RMA (rosin mildly activated), RA (rosin activated), WS (water soluble), and OA (organic acid). Oil residues include but are not limited to mineral oils, motor oils, and silicone oils.

In some embodiments, the present application provides a process for removing at least a portion of water from the surface of a wetted substrate, or surface, or device, comprising contacting the substrate, surface, or device with a composition provided herein, and then removing the substrate, surface, or device from contact with the composition.

In some embodiments, the compositions provided herein further comprises one or more additive components (*i.e.*, the compositions comprise *trans*-1,2-dichloroethylene, a second component as described herein, a third component as described herein, a fourth component as described herein, and one or more additive components as described herein). Exemplary additives include, but are not limited to, surfactants and fluorolubricants.

In some embodiments, the compositions provided herein further comprises at least one surfactant suitable for dewatering or drying the substrate. Exemplary surfactants include, but are not limited to, alkyl dimethyl ammonium isooctyl phosphates, tert-alkyl amines (*e.g.*, tert-butyl amine), perfluoro alkyl phosphates, dimethyl decenamide, fluorinated alkyl polyether, quaternary amines (*e.g.*, ammonium salts), and glycerol monostearate.

The means for contacting a device, surface, or substrate is not critical and may be accomplished, for example, by immersion of the device, surface, or substrate, in a bath containing the composition provided herein, spraying the device, surface, or substrate with the composition provided herein, or wiping the device, surface, or substrate with a material (*e.g.*, a cloth) that has been wet with the composition. Alternatively, a composition provided herein may also be used in a vapor degreasing or defluxing apparatus designed for such residue removal. Such vapor degreasing or defluxing equipment is available from various suppliers such as Forward Technology (a subsidiary of the Crest Group, Trenton, NJ), Trek Industries (Azusa, CA), and Ultronix, Inc. (Hatfield, PA) among others.

The most advanced, highest recording densities and lowest cost method of storing digital information involves writing and reading magnetic flux patterns from rotating disks coated with magnetic materials. A magnetic layer, where information is stored in the form of bits, is sputtered onto a metallic support structure. Next an overcoat, usually a carbon-based material, is placed on top of the magnetic layer for protection and finally a lubricant is applied to the overcoat. A read-write head flies above the lubricant and the information is exchanged between the head and the magnetic layer. In a relentless attempt to increase the efficiency ef information transfer, hard drive manufacturers have reduced the distance between the head and the magnetic layer, or fly-height, to less than 100 Angstroms.

Invariably, during normal disk drive application, the head and the disk surface will make contact. To reduce wear on the disk, from both sliding and flying contacts, it must be lubricated.

Fluorolubricants are widely used as lubricants in the magnetic disk drive industry to decrease the friction between the head and disk, that is, reduce the wear and therefore minimize the possibility of disk failure.

There is a need in the industry for improved methods for deposition of fluorolubricants. The use of certain solvents, such as CFC-113 and PFC-5060, has been regulated due to their impact on the environment. Therefore, solvents that will be used in this application should consider environmental impact. Also, such solvent must dissolve the fluorolubricant and form a substantially uniform or uniform coating of fluorolubricant. Additionally, existing solvents have been found to require higher fluorolubricant concentrations to produce a given thickness coating and produce irregularities in uniformity of the fluorolubricant coating.

In some embodiments, the fluorolubricants of the present disclosure comprise perfluoropolyether (PFPE) compounds, or lubricant comprising X-1P®, which is a phosphazene-containing disk lubricant. These perfluoropolyether compounds are sometimes referred to as perfluoroalkylethers (PFAE) or perfluoropolyalkylethers (PFPAE). These PFPE compounds range from simple perfluorinated ether polymers to functionalized perfluorinated ether polymers. PFPE compounds of different varieties that may be useful as fluorolubricant in the present invention are available from several sources. In some embodiments, fluorolubricants useful in the processes provided herein include, but are not limited to, Krytox® GLP 100, GLP 105 or GLP 160 (The Chemours Co., LLC, Fluoroproducts, Wilmington, DE, 19898, USA); Fomblin® Z-Dol 2000, 2500 or 4000, Z-Tetraol, or Fomblin® AM 2001 or AM 3001 (sold by Solvay Solexis S.p.A., Milan, Italy); Demnum™ LR-200 or S-65 (offered by Daikin America, Inc., Osaka, Japan); X-1P® (a partially fluorinated hyxaphenoxy cyclotriphosphazene disk lubricant available from Quixtor Technologies Corporation, a subsidiary of Dow Chemical Co, Midland, MI); and mixtures thereof. The Krytox® lubricants are perfluoroalkylpolyethers having the general structure $F(CF(CF_3)CF_2O)_n-CF_2CF_3$, wherein n ranges from 10 to 60. The Fomblin® lubricants are functionalized perfluoropolyethers that range in molecular weight from 500 to 4000 atomic mass units and have general formula $X-CF_2-O(CF_2-CF_2-O)_p-(CF_2O)_q-CF_2-X$, wherein X may be $-CH_2OH$, p+q is 40 to 180, and p/q is 0.5 to 2; $CH_2(O-CH_2-CH_2)_nOH$, wherein n is 10 to 60, $CH_2OCH_2CH(OH)CH_2OH$, or $-CH_2O-CH_2$-piperonyl. The Demnum™ oils are perfluoropolyether-based oils ranging in molecular weight from 2700 to 8400 atomic mass units. Additionally, new lubricants are being developed such as those from Moresco (Thailand) Co., Ltd, which may be useful in processes provided herein.

The fluorolubricants described herein may additionally comprise additives to improve the properties of the fluorolubricant. X-1P®, which may serve as the lubricant itself, is often added to other lower cost fluorolubricants in order to increase the durability of disk drives by passivating Lewis acid sites on the disk surface responsible for PFPE degradation. Other common lubricant additives may be used in the fluorolubricants useful in the processes provided herein.

The fluorolubricants described herein may further comprise Z-DPA (Hitachi Global Storage Technologies, San Jose, CA), a PFPE terminated with dialkylamine end-groups. The nucleophilic end-groups serve the same purpose as X1P®, thus providing the same stability without any additive.

The surface on which the fluorolubricant may be deposited is any solid surface that may benefit from lubrication. Semiconductor materials such as silica disks, metal or metal oxide surfaces, vapor deposited carbon surfaces or glass surfaces are representative of the types of surfaces that may be used in the processes described herein. In some embodiments, the processes provided herein are particularly useful in coating magnetic media such as computer drive hard disks. In the manufacture of computer disks, the surface may be a glass, or aluminum substrate with layers of magnetic media that is also coated by vapor deposition with a thin (10-50 Angstrom) layer of amorphous hydrogenated or nitrogenated carbon. The fluorolubricant may be deposited on the surface disk indirectly by applying the fluorolubricant to the carbon layer of the disk.

The first step of combining the fluorolubricant and composition provided herein (*i.e.,* as a solvent) may be accomplished in any suitable manner such as mixing in a suitable container such as a beaker or other container that may be used as a bath for the deposition process. The fluorolubricant concentration in the composition provided herein may be from 0.010 percent (wt/wt) to 0.50 percent (wt/wt).

The step of contacting said combination of fluorolubricant and composition provided herein with the surface may be accomplished in any manner appropriate for said surface (considering the size and shape of the surface). A hard drive disk must be supported in some manner such as with a mandrel or some other support that may fit through the hole in the center of the disk. The disk will thus be held vertically such that the plane of the disk is perpendicular to the solvent bath. The mandrel may have different shapes including but not limited to, a cylindrical bar, or a V-shaped bar. The mandrel shape will determine the area of contact with the disk. The mandrel may be constructed of any material strong enough to hold the disk, including but not limited to metal, metal alloy, plastic, or glass. Additionally, a disk may be supported vertically upright in a woven basket or be clamped into a vertical position with one or more clamps on the outer edge. The support may be constructed of any material with the strength to hold the disk, such as metal, metal alloy, plastic or glass. However the disk is supported, the disk will be lowered into a container holding a bath of the fluorolubricant/solvent (*i.e.,* the composition provided herein) combination. The bath may be held at room temperature or be heated or cooled to temperatures ranging from 0 °C to 50 °C.

Alternatively, the disk may be supported as described above and the bath may be raised to immerse the disk. In either case, the disk may then be removed from the bath (either by lowering the bath or by raising the disk). Excess fluorolubricant/solvent combination can be drained into the bath.

Either of the processes for contacting the fluorolubricant/solvent combination with the disk surface of either lowering the disk into a bath or raising a bath to immerse the disk are commonly referred to as dip coating. Other processes for contacting the disk with the fluorolubricant/solvent combination may be used in processes described hererin, including, but not limited to, spraying or spin coating.

When the disk is removed from the bath, the disk will have a coating of fluorolubricant and some residual solvent (*i.e.,* the composition provided herein) on its surface. The residual solvent may be evaporated. Evaporation is usually performed at room temperature. However, other temperatures both above and below room temperature may be used as well for the evaporation step. Temperatures ranging from 0 °C to 100 °C may be used for evaporation.

The surface, or the disk if the surface is a disk, after completion of the coating process, will be left with a substantially uniform or uniform coating of fluorolubricant that is substantially free of solvent. The fluorolubricant may be applied to a thickness of less than about 300 nm, and alternately to a thickness of 100 to 300 nm.

A uniform fluorolubricant coating is desired for proper functioning of a disk and so areas of varying fluorolubricant thickness are undesirable on the surface of the disk. As more and more information is being stored on the same size disk, the read/write head must get closer and closer to the disk in order to function properly. If irregularities due to variation in coating thickness are present on the surface of the disk, the probability of contact of the head with these areas on the disk is much greater. While there is a desire to have enough fluorolubricant on the disk to flow into areas where it may be removed by head contact or other means, coating that is too thick may cause "smear," a problem associated with the read/write head picking up excess fluorolubricant.

One specific coating thickness irregularity observed in the industry is that known as the "rabbit ears" effect. These irregularities are visually detected on the surface of the disk after deposition of the fluorolubricant using the existing solvent systems. When the disk is contacted with the solution of fluorolubricant in solvent and then removed from the solution, any points where the solution may accumulate and not drain readily develop drops of solution that do not readily drain off. One such point of drop formation is the contact point (or points) with the mandrel or other support device with the disk. When a V-shaped mandrel is used, there are two contact points at which the mandrel contacts the inside edge of the disk. When solution of fluorolubricant forms drops in these locations that do not drain off when removed from the bath, an area of greater thickness of fluorolubricant is created when the solvent evaporates. The two points of contact with the disk produces what is known as a "rabbit ears" effect, because the areas of greater fluorolubricant thickness produce a pattern resembling rabbit ears visually detectable on the disk surface.

When dip coating is used for depositing fluorolubricant on the surface, the pulling-up speed (speed at which the disk is removed from the bath), and the density of the fluorolubricant and the surface tension are relevant for determining the resulting film thickness of the fluorolubricant. Awareness of these parameters for obtaining the desired film thickness is required. Details on how these parameters effect coatings are given in, "Dip-Coating of Ultra-Thin Liquid Lubricant and its Control for Thin-Film Magnetic Hard Disks" in IEEE Transactions on Magnetics, vol. 31, no. 6, November 1995, the disclosure of which is incorporated herein by reference in its entirety.

## EXAMPLES

The invention will be described in greater detail by way of specific examples. The following examples are offered for illustrative purposes, and are not intended to limit the invention in any manner. Those of skill in the art will readily recognize a variety of non-critical parameters which can be changed or modified to yield essentially the same results.

### Example 1. Single Plate Distillation Analysis of Composition 1

A mixture of trans-1,2-dichloroethylene, methyl perfluoroheptene ether, 1,1,2,2,3,3,4-heptafluorocyclopentane, and ethanol was prepared and distilled in a single-plate distillation column at a pressure of 760 mm Hg per standard ASTM method D 1078. Boiling flask temperatures were monitored directly to 1°C. The distillation was stopped at 50% distilled by weight, and both distillate and heel samples were taken for determination of composition by gas chromatography. Table 1 shows the components of Composition 1, which was an azeotropic composition and exhibited a boiling point of 45°C at 101 kPa.

**Table 1.**

| Component | Initial Composition (wt %) | Heel Composition (wt %) | Distillate Composition (wt %) |
|---|---|---|---|
| EtOH | 3 | 2.3 | 3.97 |
| t-DCE | 80.93 | 80.5 | 82.28 |
| HFCP | 12.09 | 12.7 | 11.59 |
| MPHE | 3.98 | 4.5 | 2.16 |
| Boiling point (°C) | 45.1 | 45.3 | |

Without being bound by theory, it is believed that Composition 1 may be useful as a cleaning agent which is effective in removing various oils, greases, and fluxes used in electronic and industrial manufacturing processes. For vapor degreasing applications, an azeotropic cleaning blend is particularly beneficial, as the composition does not exhibit substantial composition change upon distillation, condensation, and re-mixing. This provides reliable cleaning results and decreases the risk of flammability. Furthermore, azeotrope compositions reduce the overall operation costs by eliminating the need for constant monitoring of the ratio of solvating and rinse agent, thereby reducing production downtimes and increase throughput. In addition, Composition 1 contains the highest concentration of *trans*-1,2-dichloroethylene in its class. Composition 1 is expected to be non-flammable, to have high kb value (>90), and to be a useful remover for flux and ionic contaminations due to the presence of ethanol in the composition. Composition 1 is expected to have a GWP (100yr ITH) of 30 based on the mass-based weighted average of the pure components' GWP.

### Example 2. Stability Analysis of Composition 1

A 200 gram mixture of Composition 1 was charged into a modified Soxhlet extractor to simulate vapor degreaser operations used in precision cleaning. The composition was heated to 45°C for 4 hours. Both rinse sump (distillate) and boil sump (boil flask) were analyzed by GC/FID. The distillation rate was about 200 gram/hour. As shown in Table 2, Composition 1 exhibited minimal changes in the composition during the Soxhlet analysis.

**Table 2.**

| Component | Initial Composition (wt%) | Rinse Sump Composition (wt%) | Boil Sump Composition (wt%) | Boiling Point (°C) |
|---|---|---|---|---|
| t-DCE | 80.93 | 80.94 | 80.64 | 45°C |
| MPHE | 3.98 | 3.93 | 4.31 | |
| HFCP | 12.09 | 12.08 | 12.21 | |
| EtOH | 3.00 | 3.05 | 2.84 | |

### Example 3. Stability Analysis of Composition 2

A 200 gram mixture of trans-1,2-dichloroethylene (t-DCE), methyl perfluoroheptene ether (MPHE), 1,1,2,2,3,3,4-heptafluorocyclopentane (HFCP), and isopropanol (IPA) was charged into a modified Soxhlet extractor to simulate vapor degreaser operations used in precision cleaning. The composition was heated to 45°C for 4 hours. Both rinse sump (distillate) and boil sump (boil flask) were analyzed by GC/FID. The distillation rate was about 200 gram/hour. As shown in Table 3, Composition 2 exhibited minimal changes in the composition during the Soxhlet analysis.

**Table 3.**

| Component | Initial Composition (wt%) | Rinse Sump Composition (wt%) | Boil Sump Composition (wt%) | Boiling Point (°C) |
|---|---|---|---|---|
| IPA | 3.04 | 2.67 | 3.53 | 46 |
| t-DCE | 80.95 | 82.59 | 78.75 | |
| HFCP | 11.96 | 11.91 | 12.08 | |
| MPHE | 4.05 | 2.83 | 5.64 | |

### Example 4. Cleaning Effectiveness Factor (CEF) Analysis of Composition 1

Composition 1 was decanted into a 1000 mL beaker with a condensing coil and heated to the boiling point (45.2°C) using a hot plate. Three precleaned 304 stainless steel coupons were weighed on an analytical balance (initial weight). A thin film of Mobil 600W cylinder oil was applied to one surface of each coupon and excess was removed with a wipe. Each coupon was then reweighed to determine the soiled weight and subsequently placed in the vapor phase of the boiling composition for ten minutes. The coupons were then removed and allowed to dry and off-gas for ten minutes before reweighing (post cleaning weight) to determine the cleaning effectiveness factor of the solvent blend. Results of the cleaning analysis are shown in Table 4 and the CEF was determined according to Equation 1.

$$\text{Equation 1.}$$

$$CEF = (\text{soiled weight - post cleaning weight}) / (\text{soiled weight - initial weight})$$

**Table 4.**

| Coupon ID | Initial Weight (g) | Soiled Weight (g) | Post-Cleaned Weight (g) | CEF |
|---|---|---|---|---|
| 1A | 19.6634 | 19.6831 | 19.6634 | 100.0% |
| 1B | 20.0253 | 20.0606 | 20.0251 | 100.6% |
| 1C | 20.0811 | 20.1169 | 20.0808 | 100.8% |

**Example 5. Cleaning Effectiveness Factor (CEF) Analysis of Composition 2**

Composition 2 was decanted into a 1000 mL beaker with a condensing coil and heated to the boiling point (46.2°C) using a hot plate. Three pre-cleaned 304 stainless steel coupons were weighed on an analytical balance (initial weight). A thin film of Mobil 600W cylinder oil was applied to one surface of each coupon and excess was removed with a wipe. Each coupon was then reweighed to determine the soiled weight and subsequently placed in the vapor phase of the boiling composition for ten minutes. The coupons were then removed and allowed to dry and off-gas for ten minutes before reweighing (post cleaning weight) to determine the cleaning effectiveness factor of the solvent blend. Results of the cleaning analysis are shown in Table 5 and the CEF was determined according to Equation 1.

**Table 5.**

| Coupon | Initial Weight (g) | Soiled Weight (g) | Post-Cleaned Weight (g) | CEF |
|--------|--------------------|-------------------|--------------------------|--------|
| 2A | 19.6632 | 19.6828 | 19.6633 | 99.5% |
| 2B | 20.0250 | 20.0706 | 20.0251 | 99.8% |
| 2C | 20.0807 | 20.1054 | 20.0807 | 100.0% |

**Example 6. Single Plate Distillation Analysis of Composition 3**

Composition 3 was prepared and distilled in a 25-plate distillation column at a pressure of 760 mm Hg per standard ASTM method D 1078. Head and flask temperatures were monitored directly to 1°C. Distillate samples were taken throughout the distillation for determination of composition by gas chromatography. Table 6 shows the components of Composition 3, which was an azeotrope-like composition and exhibited a boiling point of 46°C at 101 kPa.

**Table 6.**

| Component | Initial (%wt) | Distillate (%wt) | Boiling Point (°C) |
|-----------|---------------|------------------|---------------------|
| HFCP | 9.76 | 10.33 | |
| Novec 7300 | 11.42 | 11.05 | 46 |
| t-DCE | 75.15 | 76.02 | |
| n-hexane | 3.67 | 2.6 | |

**Example 7. Quaternary Azeotropic Ranges**

The quaternary azeotrope-like composition ranges were determined via percent deviation between the dew point and bubble point pressures, relative to the bubble point pressure. Dew point and bubble point pressures, at the operating boiling temperature of 45°C from Example 2, of compositions with varying composition at a fixed weight percent of 3% ethanol were determined using an equal fugacity-based vapor-liquid equilibria (VLE) calculation, and the percent deviation for each given composition was calculated. Binary VLE data for each of the constituent binaries in the quaternary system were experimentally collected such that activity coefficient model binary interaction parameters could be fit for each binary. Figure 1 demonstrates the bubble to dew point pressure deviation in the slice of ternary composition space, sliced at a weight percent of 3% ethanol. The contour lines follow values of constant percent deviation between the dew point and bubble point pressures. As shown Figure 1, the 3% deviation contour line includes compositions from 0.1% to 32% HFCP; 0.1% to 15% MPHE; and 65% to 96.8% t-DCE; at 3% ethanol.

It is to be understood that while the invention has been described in conjunction with the detailed description thereof, the foregoing description is intended to illustrate and not limit the scope of the invention, which is defined by the scope of the appended claims. Other aspects, advantages, and modifications are within the scope of the following claims. It should be appreciated by those persons having ordinary skill in the art(s) to which the present invention relates that any of the features described herein in respect of any particular aspect and/or embodiment of the present invention can be combined with one or more of any of the other features of any other aspects and/or embodiments of the present invention described herein, with modifications as appropriate to ensure compatibility of the combinations. Such combinations are considered to be part of the present invention contemplated by this disclosure.

**Claims**

1. An azeotrope or azeotrope-like composition, comprising:

    i) 75 to 85 weight percent trans-1,2-dichloroethylene;
    ii) 1 to 5 weight percent methyl perfluoroheptene ether;
    iii) 10 to 15 weight percent 1,1,2,2,3,3,4-heptafluorocyclopentane; and
    iv) 1 to 5 weight percent ethanol or isopropanol.

2. The composition of claim 1, wherein methyl perfluoroheptene ether comprises a mixture of 50 weight percent 5-methoxy perfluoro-3-heptene, 20 weight percent 3-methoxy perfluoro-3-heptene, 20 weight percent 4-methoxy perfluoro-2-heptene, and 8 weight percent 4-methoxy perfluoro-3-heptene,

3. The composition of claims 1 or 2, wherein the composition comprises 3 to 5 weight percent methyl perfluoroheptene ether.

4. The composition of any of the proceeding claims, wherein the composition comprises 11 to 13 weight percent 1,1,2,2,3,3,4-heptafluorocyclopentane.

5. The composition of any of the proceeding claims, wherein the composition comprises 2 to 4 weight percent ethanol or isopropanol.

6. The composition of any of the proceeding claims, wherein the composition comprises 79 to 81 weight percent trans-1,2-dichloroethylene.

7. The composition of claim 1, wherein the composition comprises:

    i) 79 to 81 weight percent trans-1,2-dichloroethylene;
    ii) 3 to 5 weight percent methyl perfluoroheptene ether;
    iii) 11 to 13 weight percent 1,1,2,2,3,3,4-heptafluorocyclopentane; and
    iv) 2 to 4 weight percent ethanol or isopropanol, preferably

    wherein the composition comprises:

    i) 81 weight percent trans-1,2-dichloroethylene:
    ii) 4 weight percent methyl perfluoroheptene ether;
    iii) 12 weight percent 1,1,2,2,3,3,4-heptafluorocyclopentane; and
    iv) 3 weight percent ethanol or isopropanol.

8. The composition of any of the proceeding claims, wherein the fourth component iv) is ethanol and wherein the composition has a boiling point of 44°C to 46°C at a pressure of 101 kPa, or wherein the fourth component iv) is isopropanol and wherein the composition has a boiling point of 45°C to 47°C at a pressure of 101 kPa.

9. The composition of any of the proceeding claims, wherein the composition consists essentially of, preferably consists of, trans-1,2-dichloroethylene, methyl perfluoroheptene ether, 1,1,2,2,3,3,4-heptafluorocyclopentane, and ethanol or isopropanol.

10. An azeotrope or azeotrope-like composition, comprising:

    i) 70 to 80 weight percent trans-1,2-dichloroethylene;
    ii) 5 to 15 weight percent 1,1,1,2,2,3,4,5,5,5-decafluoro-3-methoxy-4-(trifluoromethyl)pentane;
    iii) 5 to 10 weight percent 1,1,2,2,3,3,4-heptafluorocyclopentane; and
    iv) 1 to 5 weight percent n-hexane.

11. A process for dissolving a solute, comprising contacting and mixing said solute with a sufficient quantity of the composition of any of the proceeding claims.

12. A process of cleaning a surface, comprising contacting the composition of any of claims 1 to 10 with said surface.

13

13. A process for removing at least a portion of water from the surface of a wetted substrate, comprising contacting the substrate with the composition of any of claims 1 to 10, and then removing the substrate from contact with the composition.

14. The process of claim 13, wherein composition further comprises at least one surfactant suitable for dewatering or drying the substrate.

15. A process of depositing a fluoro lubricant on a surface, comprising:

a) combining a fluorolubricant and a solvent to form a lubricant-solvent combination, wherein the solvent comprises a composition of any of claims 1 to 10;
b) contacting the lubricant-solvent combination with the surface; and
c) evaporating the solvent from the surface to form a fluorolubricant coating on the surface.

**Patentansprüche**

1. Azeotrope oder azeotropartige Zusammensetzung, umfassend:

i) 75 bis 85 Gewichtsprozent trans-1,2-Dichlorethylen;
ii) 1 bis 5 Gewichtsprozent Methylperfluorheptenether;
iii) 10 bis 15 Gewichtsprozent 1,1,2,2,3,3,4-Heptafluorcyclopentan; und
iv) 1 bis 5 Gewichtsprozent Ethanol oder Isopropanol.

2. Zusammensetzung nach Anspruch 1, wobei Methylperfluorheptenether eine Mischung von 50 Gewichtsprozent 5-Methoxyperfluor-3-hepten, 20 Gewichtsprozent 3-Methoxyperfluor-3-hepten, 20 Gewichtsprozent 4-Methoxyperfluor-2-hepten und 8 Gewichtsprozent 4-Methoxyperfluor-3-hepten umfasst.

3. Zusammensetzung nach Anspruch 1 oder 2, wobei die Zusammensetzung 3 bis 5 Gewichtsprozent Methylperfluorheptenether umfasst.

4. Zusammensetzung nach einem der vorstehenden Ansprüche, wobei die Zusammensetzung 11 bis 13 Gewichtsprozent 1,1,2,2,3,3,4-Heptafluorcyclopentan umfasst.

5. Zusammensetzung nach einem der vorstehenden Ansprüche, wobei die Zusammensetzung 2 bis 4 Gewichtsprozent Ethanol oder Isopropanol umfasst.

6. Zusammensetzung nach einem der vorstehenden Ansprüche, wobei die Zusammensetzung 79 bis 81 Gewichtsprozent trans-1,2-Dichlorethylen umfasst.

7. Zusammensetzung nach Anspruch 1, wobei die Zusammensetzung umfasst:

i) 79 bis 81 Gewichtsprozent trans-1,2-Dichlorethylen;
ii) 3 bis 5 Gewichtsprozent Methylperfluorheptenether;
iii) 11 bis 13 Gewichtsprozent 1,1,2,2,3,3,4-Heptafluorcyclopentan; und
iv) 2 bis 4 Gewichtsprozent Ethanol oder Isopropanol, vorzugsweise,

wobei, die Zusammensetzung umfasst:

i) 81 Gewichtsprozent trans-1,2-Dichlorethylen;
ii) 4 Gewichtsprozent Methylperfluorheptenether;
iii) 12 Gewichtsprozent 1,1,2,2,3,3,4-Heptafluorcyclopentan; und
iv) 3 Gewichtsprozent Ethanol oder Isopropanol.

8. Zusammensetzung nach einem der vorstehenden Ansprüche, wobei die vierte Komponente iv) Ethanol ist und wobei die Zusammensetzung einen Siedepunkt von 44 °C bis 46 °C bei einem Druck von 101 kPa aufweist, oder wobei die vierte Komponente iv) Isopropanol ist und wobei die Zusammensetzung einen Siedepunkt von 45 °C bis 47 °C bei einem Druck von 101 kPa aufweist.

**9.** Zusammensetzung nach einem der vorstehenden Ansprüche, wobei die Zusammensetzung im Wesentlichen besteht aus, vorzugsweise besteht aus, trans-1,2-Dichlorethylen, Methylperfluorheptenether, 1,1,2,2,3,3,4-Heptafluorcyclopentan, und Ethanol oder Isopropanol.

**10.** Azeotrope oder azeotropartige Zusammensetzung, umfassend:

i) 70 bis 80 Gewichtsprozent trans-1,2-Dichlorethylen;
ii) 5 bis 15 Gewichtsprozent 1,1,1,2,2,3,4,5,5,5-Decafluor-3-methoxy-4-(trifluormethyl)pentan;
iii) 5 bis 10 Gewichtsprozent 1,1,2,2,3,3,4,-Heptafluorcyclopentan; und
iv) 1 bis 5 Gewichtsprozent n-Hexan.

**11.** Verfahren zum Lösen eines Soluts, umfassend In-Kontakt-Bringen und Mischen des Soluts mit einer ausreichenden Menge der Zusammensetzung nach einem der vorstehenden Ansprüche.

**12.** Verfahren zum Reinigen einer Fläche, umfassend In-Kontakt-Bringen der Zusammensetzung nach einem der Ansprüche 1 bis 10 mit der Fläche.

**13.** Verfahren zum Entfernen von mindestens einem Teil von Wasser von der Fläche eines befeuchteten Substrats, umfassend In-Kontakt-Bringen des Substrats mit der Zusammensetzung nach einem der Ansprüche 1 bis 10, und dann Entfernen des Substrats aus dem Kontakt mit der Zusammensetzung.

**14.** Verfahren nach Anspruch 13, wobei die Zusammensetzung ferner mindestens ein Tensid umfasst, das sich zum Entwässern oder Trocknen des Substrats eignet.

**15.** Verfahren zum Ablagern eines Fluorschmiermittels auf einer Fläche, umfassend:

a) Kombinieren eines Fluorschmiermittels und eines Lösungsmittels zwecks Bildung einer Schmiermittel-Lösungsmittel-Kombination, wobei das Lösungsmittel eine Zusammensetzung nach einem der Ansprüche 1 bis 10 umfasst;
b) In-Kontakt-Bringen der Schmiermittel-Lösungsmittel-Kombination mit der Fläche; und
c) Verdampfen des Lösungsmittels von der Fläche zwecks Bildung einer Fluorschmiermittelbeschichtung auf der Fläche.

**Revendications**

**1.** Composition azéotrope ou de type azéotrope, comprenant :

i) 75 à 85 pourcent en poids de trans-1,2-dichloroéthylène ;
ii) 1 à 5 pourcent en poids d'éther de méthylperfluoroheptène;
iii) 10 à 15 pourcent en poids de 1,1,2,2,3,3,4-heptafluorocyclopentane ; et
iv) 1 à 5 pourcent en poids d'éthanol ou d'isopropanol.

**2.** Composition selon la revendication 1, dans laquelle l'éther de méthylperfluoroheptène comprend un mélange de 50 pourcent en poids de 5-méthoxyperfluoro-3-heptène, 20 pourcent en poids de 3-méthoxyperfluoro-3-heptène, 20 pourcent en poids de 4-méthoxyperfluoro-2-heptène et 8 pourcent en poids de 4-méthoxyperfluoro-3-heptène.

**3.** Composition selon la revendication 1 ou 2, où la composition comprend 3 à 5 pourcent en poids d'éther de méthylperfluoroheptène.

**4.** Composition selon l'une quelconque des revendications précédentes, où la composition comprend 11 à 13 pourcent en poids de 1,1,2,2,3,3,4-heptafluorocyclopentane.

**5.** Composition selon l'une quelconque des revendications précédentes, où la composition comprend 2 à 4 pourcent en poids d'éthanol ou d'isopropanol.

**6.** Composition selon l'une quelconque des revendications précédentes, où la composition comprend 79 à 81 pourcent en poids de trans-1,2-dichloroéthylène.

**7.** Composition selon la revendication 1, où la composition comprend :

i) 79 à 81 pourcent en poids de trans-1,2-dichloroéthylène ;
ii) 3 à 5 pourcent en poids d'éther de méthylperfluoroheptène ;
iii) 11 à 13 pourcent en poids de 1,1,2,2,3,3,4-heptafluorocyclopentane ; et
iv) 2 à 4 pourcent en poids d'éthanol ou d'isopropanol, de préférence

où la composition comprend :

i) 81 pourcent en poids de trans-1,2-dichloroéthylène ;
ii) 4 pourcent en poids d'éther de méthylperfluoroheptène ;
iii) 12 pourcent en poids de 1,1,2,2,3,3,4-heptafluorocyclopentane ; et
iv) 3 pourcent en poids d'éthanol ou d'isopropanol.

**8.** Composition selon l'une quelconque des revendications précédentes, dans laquelle le quatrième composant iv) est de l'éthanol et où la composition a un point d'ébullition de 44 °C à 46 °C à une pression de 101 kPa ou dans laquelle le quatrième composant iv) est de l'isopropanol et où la composition a un point d'ébullition de 45 °C à 47 °C à une pression de 101 kPa.

**9.** Composition selon l'une quelconque des revendications précédentes, où la composition est constituée essentiellement de, de préférence est constituée de, trans-1,2-dichloroéthylène, éther de méthylperfluoroheptène, 1,1,2,2,3,3,4-heptafluorocyclopentane et éthanol ou isopropanol.

**10.** Composition azéotrope ou de type azéotrope, comprenant :

i) 70 à 80 pourcent en poids de trans-1,2-dichloroéthylène ;
ii) 5 à 15 pourcent en poids de 1,1,1,2,2,3,4,5,5,5-décafluoro-3-méthoxy-4-(trifluorométhyl)pentane ;
iii) 5 à 10 pourcent en poids de 1,1,2,2,3,3,4-heptafluorocyclopentane ; et
iv) 1 à 5 pourcent en poids de n-hexane.

**11.** Procédé pour la dissolution d'un soluté, comprenant la mise en contact et le mélange dudit soluté avec une quantité suffisante de la composition selon l'une quelconque des revendications précédentes.

**12.** Procédé pour le nettoyage d'une surface, comprenant la mise en contact de la composition selon l'une quelconque des revendications 1 à 10 avec ladite surface.

**13.** Procédé pour retirer au moins une portion d'eau de la surface d'un substrat mouillé, comprenant la mise en contact du substrat avec la composition selon l'une quelconque des revendications 1 à 10 et ensuite le retrait du substrat du contact avec la composition.

**14.** Procédé selon la revendication 13, dans lequel la composition comprend en outre au moins un tensioactif approprié pour déshydrater ou sécher le substrat.

**15.** Procédé pour le dépôt d'un lubrifiant fluoré sur une surface, comprenant :

a) la combinaison d'un lubrifiant fluoré et d'un solvant pour former une combinaison lubrifiant-solvant, dans lequel le solvant comprend une composition selon l'une quelconque des revendications 1 à 10 ;
b) la mise en contact de la combinaison lubrifiant-solvant avec la surface ; et
c) l'évaporation du solvant à partir de la surface pour former un revêtement de lubrifiant fluoré sur la surface.

t-DCE/MPHE/HFCP/wt-% 3.0 of Ethanol at 45.0 degC --AAD % =100*(P_BP-P_DP)/P_BP

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018125738 A1
- WO 2015075034 A1
- WO 2014096417 A1
- WO 2016182700 A1
- WO 2011031581 A2

**Non-patent literature cited in the description**

- **M. F. DOHERTY ; M.F. MALONE.** Conceptual Design of Distillation Systems. McGraw-Hill, 2001, 185
- Dip-Coating of Ultra-Thin Liquid Lubricant and its Control for Thin-Film Magnetic Hard Disks. *IEEE Transactions on Magnetics,* November 1995, vol. 31 (6